Europäisches Patentamt

European Patent Office

Office européen des brevets

(19)

(11) Veröffentlichungsnummer : **0 100 933**
**B1**

(12) **EUROPÄISCHE PATENTSCHRIFT**

(45) Veröffentlichungstag der Patentschrift :
21.01.87

(21) Anmeldenummer : 83107091.7

(22) Anmeldetag : 20.07.83

(51) Int. Cl.⁴ : **B 23 K 15/00**

(54) **Verfahren und Anordnung zum Bearbeiten eines Werkstücks mittels eines fokussierten Elektronenstrahls.**

(30) Priorität : 02.08.82 DE 3228846
05.11.82 DE 3240887

(43) Veröffentlichungstag der Anmeldung :
22.02.84 Patentblatt 84/08

(45) Bekanntmachung des Hinweises auf die Patenterteilung : 21.01.87 Patentblatt 87/04

(84) Benannte Vertragsstaaten :
DE FR GB

(56) Entgegenhaltungen :
WO-A-82 /023 52
DE-C- 3 043 635

(73) Patentinhaber : **Institut für Kerntechnik und Energie-wandlung e.V.**
**Holderbuschweg 52**
**D-7000 Stuttgart 80 (DE)**

(72) Erfinder : **Koch, Dieter, Dr.-Ing.**
**Engelbergstrasse 40**
**D-7000 Stuttgart 31 (DE)**
Erfinder : **Noller, Friedemann, Dr.-Ing.**
**Kreutäckerstrasse 28**
**D-7033 Herrenberg 1 (DE)**

(74) Vertreter : **Patentanwälte Dr. Ing. Eugen Maier Dr. Ing. Eckhard Wolf**
**Pischekstrasse 19**
**D-7000 Stuttgart 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Anordnung zum Bearbeiten, insbesondere Schweißen, Aufheizen, Umschmelzen eines Werkstücks mittels eines fokussierten Elektronenstrahls, dessen Auftreffpunkt relativ zum Werkstück auf einer vorgegebenen Bahnkurve bewegt und zusätzlich auf einer der Bahnkurve überlagerten Modulationskurve gegenüber der Bahnkurve abgelenkt wird.

Wenn im folgenden von dem Werkstück die Rede ist, so sind darunter auch zwei an einer Stoßfläche gegeneinanderliegende Teile zu verstehen, die entlang dem Stoß miteinander verschweißt werden sollen.

Es ist ein Verfahren der genannten Art bekannt, bei welchem sowohl die Bahnkurve als auch die Modulationskurve durch analytische Funktionen mit Hilfe entsprechender Funktionsgeneratoren dargestellt werden. In analytischer Weise lassen sich nur ganz spezielle Kurven, wie Gerade, Kreis, Parabel u. dgl. erzeugen, die beim Fortbewegen des Strahls längs der Bahnkurve zu zickzackförmigen oder spiraligen Figuren werden. Hinzu kommt, daß die analytischen Funktionen, die zur Bildung bestimmter Kurventypen zusammengesetzt werden können, mit einer bestimmten Bahngeschwindigkeit durchlaufen werden, die von der Kurvendarstellung abhängig und nicht einstellbar ist.

Weiter ist es bei einem Elektronenstrahlschweißverfahren der eingangs angegebenen Art bekannt (WO-A-82/02352), den Elektronenstrahl schrittweise entlang einer Folge von die Modulationskurve bildenden diskreten Stützpunkten zu bewegen, mit dem Ziel, eine günstigere Energieverteilung im Bereich der Schweißnaht zu erhalten. Der Elektronenstrahl wird dabei jeweils senkrecht zur Bewegungsrichtung des Werkstücks ausgelenkt, so daß sich entweder mäanderförmige Schweißmuster oder matrixartige Schweißpunktverteilungen ergeben. Die dynamischen Strömungsvorgänge in der Schweißschmelze bleiben bei dem bekannten Verfahren unberücksichtigt. Die Auslenkung des Elektronenstrahls wird über ein Computerprogramm gesteuert, ohne daß im einzelnen angegeben ist, in welcher Weise die Modulationskoordinaten erzeugt bzw. ausgelesen werden.

Theoretische und experimentelle Voruntersuchungen zur vorliegenden Erfindung haben zu folgenden Erkenntnissen geführt:

Der auf das Werkstück auftreffende Elektronenstrahl überträgt seine Energie in Form von Wärme auf das Werkstück und heizt dieses lokal über die Schmelz- und Verdampfungstemperatur auf. Es entsteht dabei eine Schmelzzone, die durch eine Phasengrenze vom Festmaterial getrennt ist, sowie eine innerhalb der Schmelzzone im unmittelbaren Auftreffbereich des Elektronenstrahls angeordnete Dampfkapillare. Die Phasengrenze zwischen der Dampfkapillare und der Schmelze stellt sich im wesentlichen aufgrund der energetischen Gleichgewichtsbedingungen im Grenzbereich ein. Durch den Vorschub des Werkstücks wird das Material im Bereich der Vorderfront der Dampfkapillare aufgeschmolzen, während es im Bereich der Rückseite der Dampfkapillare erstarrt. Das aufgeschmolzene Material muß somit von der Vorderseite um die Dampfkapillare herum zur Rückseite transportiert werden. Messungen haben gezeigt, daß beim Tiefschweißprozeß nur ein sehr geringer Anteil von weniger als 2 % der Schmelze verdampft wird, während der überwiegende Teil mit einer Geschwindigkeit in der Größenordnung der Vorschugbeschwindigkeit um die Kapillare herumströmt. Der Aufschmelz- und Erstarrungsvorgang unterliegt daher u. a. auch strömungsmechanischen Gesetzen.

Aufgrund des sich beim Schweißvorgang einstellenden Druckunterschiedes zwischen dem Inneren der Dampfkapillare und der Schweißkammer tritt zudem eine Dampfströmung von der Kapillare in die Schweißkammer auf, die zu dynamischen Effekten Anlaß geben kann. Ein entsprechender Effekt kann beim Durchschweißen auf der Unterseite eines Werkstücks auftreten, wenn dadurch ein abrupter Druckabfall in der Kapillare entsteht. Bei einem solchen Druckabfall neigt die nachgeführte Rückfront der Kapillare dazu, in das Kapillareninnere einzutreten und dort in den Strahlengang zu gelangen. Das eingetretene Material wird dann vom auftreffenden Elektronenstrahl verdampft, was mit einem Druckanstieg und einem erneuten Zurückweichen der Phasengrenze verbunden ist. Eine solche Dynamik führt bei nicht durchgeschweißten Nähten zur Bildung von sogenannten Spikes, d. h. zur Ausbildung unregelmäßiger scharfer Wurzellunker, von denen eine nachteilige Kerbwirkung auf das Bauteil ausgehen kann. Bei durchgeschweißten Nähten kommt es außerdem häufig zu unregelmäßiger Ausbildung der Unterraupe, verbunden mit starker Spritzerbildung. Je stärker der Kapillarenverschluß bei diesen Dynamikerscheinungen ist, um so höhere Durckunterschiede und um so stärkere Auswürfe ergeben sich.

Diese Effekte treten insbesondere beim ungependelten Elektronenstrahl auf. Je nach Fokussierung des Elektronenstrahls bilden sich mehr keulenförmige und mehr trompetenförmige Kapillaren aus. Die keulenförmigen Kapillaren mit engem Hals führen eher zu Spritzern auf der Seite der Oberraupe, während die trompetenförmigen Kapillaren mit spitzem Grund eher zu unterraupenseitigen Spritzern führen, sofern nach unten durchgeschweißt wird.

Durch ein Pendeln des Elektronenstrahls auf einer gegenüber der Bahnkurve ausgelenkten Modulationskurve wird vor allem erreicht, daß der Kapillarenquerschnitt vergrößert und über die Länge ausgeglichen wird. Eingehende Untersuchungen bei Elektronenstrahlschweißvorgängen haben ergeben, daß das Gefüge einer Schweißnaht durch die Mikrobewegung des Elektronenstrahls während des Schweißvorgangs, also durch die Form der Modulationskurve, die Geschwindigkeit, den Geschwindigkeitsverlauf entlang der Modulationskurve maßgeblich beeinflußt wird. Die optimale Modulation läßt sich im Einzelfall unter Berücksichtigung des zu bearbeitenden Materials und der geometrischen Abmessungen im Bereich des Schweißspalts regelmäßig nur empirisch ermitteln. Mit den bisher zur Verfügung stehenden analytischen Funktionsdarstellungen sind einer solchen Optimierung enge Grenzen gesetzt.

Schweißexperimente haben nun gezeigt, daß es beim Pendeln des Elektronenstrahls an der Grenzfläche zwischen der Dampfphase und der Schmelze zu fortschreitenden lokalen Verdampfungserscheinungen und damit zu fortschreitenden Störungen im Strömungsverlauf innerhalb der Schmelzzone kommen kann. Diese Störungen können je nach Richtung und Geschwindigkeit der Strahlbewegung, die durch die Vorschubbewegung hervorgerufene Strömung in der Schmelze unterstützen oder hemmen.

Der Erfindung liegt daher die Aufgabe zugrunde, das bekannte Verfahren der eingangs angegebenen Art dahingehend zu verbessern, daß beliebige Kurvendormen für die Modulation des Elektronenstrahls entlang der Bahnkurve zur Verfügung gestellt werden können, die hinsichtlich der Gestalt und Amplitude sowie hinsichtlich der Durchlaufrichtung und der Durchlaufgeschwindigkeit des Elektronenstrahls den Strömungsverhältnissen in der Schmelzzone optimal anpassbar sind.

Zur Lösung dieser Aufgabe wird die in Anspruch 1 angegebene Merkmalskombination vorgeschlagen. Weitere vorteilhafte Ausgestaltungen und Weiterbildungen des erfindungsgemäßen Verfahrens sowie bevorzugte Ausgestaltungen einer Schaltungsanordnung zur Durchführung dieses Verfahrens ergeben sich aus den Unteransprüchen.

Die punktweise Darstellung der Modulationskurve sowohl hinsichtlich der Kurvenform als auch der Bahngeschwindigkeit entlang der Kurve ermöglicht einen großen Spielraum für eine optimale Anpassung an die materialmäßigen und geometrischen Bedingungen des Bearbeitungsvorgangs. Zur Erreichung guter Schweißergebnisse wird die Elektronenstrahlbewegung den Strömungsverhältnissen in der Schmelzzone·dadurch angepasst, daß die Modulationskurve im wesentlichen spiegelsymmetrisch zur Bahnkurventangente ausgebildet ist und vom Elektronenstrahl in zur Bahnkurventangente spiegelsymmetrischen Richtungen durchlaufen wird. Da aufgrund der Relativbewegung des Werkstücks gegenüber dem Auftreffpunkt des Elektronenstrahls innerhalb der Schmelzzone eine von der entgegen der Bewegungsrichtung des Werkstücks gesehen vorderen Seite um die Dampfkapillare herum zur Rückseite geführte Strömung erzeugt wird, wird der Elektronenstrahl dabei zumindest in den gegenüber der Bahnkurve stärker ausgelenkten Abschnitten der Modulationskurve mit einer der Strömungsrichtung in den jeweils benachbarten Bereichen der Schmelzzone entsprechenden Richtungskomponente bewegt.

Beim schrittweisen Durchlaufen der Modulationskurve wird der Elektronenstrahl an den einzelnen Stützpunkten kurzzeitig angehalten. Es hat sich als vorteilhaft erwiesen, wenn der Elektronenstrahl zwischen jeweils zwei Stützpunkten auf einer durch die Stützpunkte begrenzten Interpolationsstrecke kontinuierlich bewegt wird. Die Bahngeschwindigkeit entlang der Modulationskurve läßt sich einfach dadurch variieren, daß die Stützpunkte in einem entsprechenden variablen Abstand voneinander angeordnet werden : Je dichter die Stützpunkte in einem bestimmten Kurvenbereich liegen, umso langsamer wird dieser Bereich vom Elektronenstrahl durchlaufen.

Gemäß einer bevorzugten Ausgestaltung der Erfindung werden die Ortskoordinaten der einzelnen Stützpunkte aus einer digitalen Speicheranordnung sequential ausgelesen, in ein analoges Strom- und Spannungssignal umgewandelt und in dieser Form den Ablenkspulen oder -platten für den Elektronenstrahl zugeleitet. Zweckmäßig werden dabei die den Koordinaten der einzelnen Stützpunkte zugeordneten Amplituden der analogsignale in einer vor den Ablenkspulen oder -platten angeordneten Filteranordnung, deren Grenzfrequenz eine Funktion, vorzugsweise ein Vielfaches, der Auslösefrequenz ist, geglättet.

Gemäß einer weiteren vorteilhaften Ausgestaltung der Erfindung kann auch die Fokuslage und/oder die Strahlstromintensität entlang der Modulationskurve variiert werden. Die den einzelnen Stützpunkten der Modulationskurve zugeordneten Steuerungsdaten für die Fokuslage und/oder die Strahlstromintensität werden ähnlich wie die Koordinaten sequentiell aus einer digitalen Speicheranordnung ausgelesen, in ein analoges Signal umgewandelt und in dieser Form, gegebenenfalls nach Glättung in einer Filteranordnung, zur Fokussierung und/oder Strahlstromsteuerung des Elektronenstrahls verwendet.

Zur Durchführung des erfindungsgemäßen Verfahrens wird nach der Erfindung eine Schaltanordnung vorgeschlagen, die mindestens zwei Datenspeicher für die X- und Y-Koordinatenwerte der Modulationskurve enthält, deren Adressleitungen gemeinsam mit dem Zählausgang eines durch einen Taktgenerator mit einer Taktfrequenz zwischen 10 kHz und 10 MHz, vorzugsweise zwischen 100 kHz und 1 MHz, angesteuerten Zählers und deren Datenleitungen mit dem Eingang je eines die betreffenden Ablenkspulen oder -platten der Elektronenstrahlbearbeitungsmaschine ansteuernden Digital/Analogwandlers verbunden sind.

Als Datenspeicher kommen vor allem vorprogrammierte Lesespeicher (ROMs) in Betracht. Neuerdings stehen auch CMOS-Schreib-Lesespeicher (CMOS-RAMs) zur Verfügung, deren Speicherinhalt mit sehr geringem Energieaufwand aus Kleinstbatterien aufrechterhalten werden kann.

Im folgenden wird die Erfindung anhand der Zeichnung näher erläutert. Es zeigen

Figur 1 ein Blockschaltbild einer bevorzugten Schaltungsanordnung zur Erzeugung einer Modulations- oder Pendelkurve ;

Figuren 2a und b eine Draufsicht und einen senkrechten Schnitt durch ein vom Elektronenstrahl einer Elektronenstrahlschweißmaschine beaufschlagtes bewegtes Werkstück in schematischer Modelldarstellung ;

Figuren 3 bis 7 verschiedene Modulationskurven.

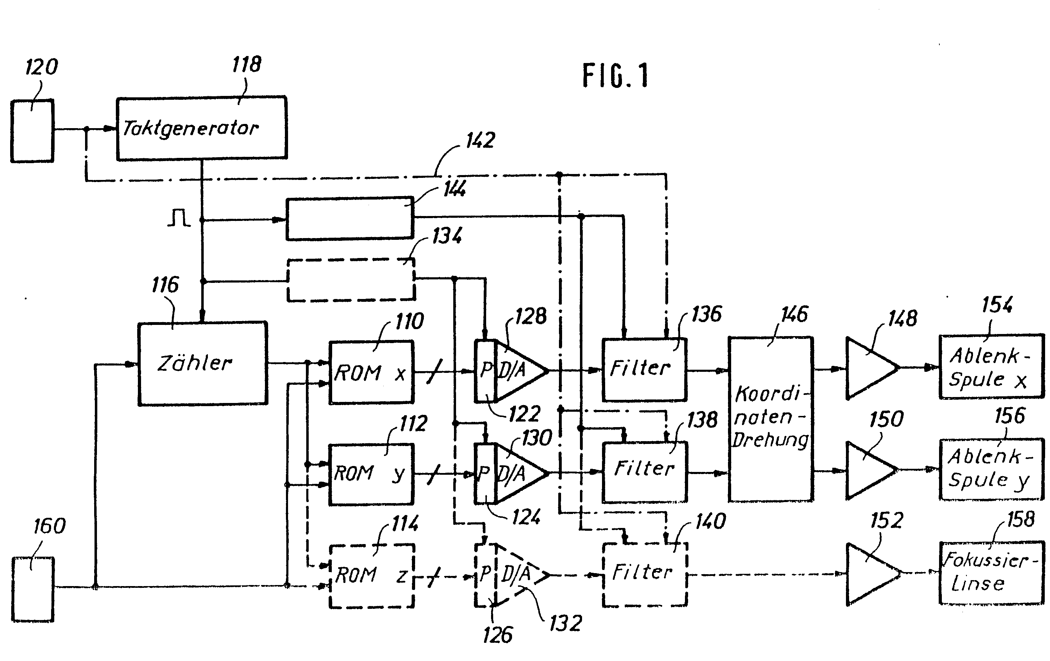

Bei der in Fig. 1 dargestellten Schaltungsanordnung handelt es sich um eine Zusatzeinrichtung für eine Elektronenstrahlschweißmaschine, in welcher der Auftreffpunkt eines fokussierten Elektronenstrahls relativ zu dem zu schweißenden Werkstück auf einer vorgegebenen Bahnkurve bewegt wird. Es ist dabei unerheblich, ob die Relativbewegung durch Verschieben des Werkstücks oder durch entsprechende Bewegung des Elektronenstrahls hervorgerufen wird. Mit der Schaltungsanordnung wird eine Modulations- oder Pendelkurve erzeugt, entlang der der Elektronenstrahl im Verlauf des Schweißvorgangs gegenüber der Bahnkurve abgelenkt wird.

Die X- und Y-Koordinaten der Modulationskurve sind punktweise in digitaler Form in den Datenspeichern 110, 112 abgespeichert und können aus diesen sequentiell in fortlaufenden Zyklen ausgelesen werden. Als Datenspeicher kommen sowohl die eingezeichneten Lesespeicher (ROMs) als auch CMOS-Lese- und Schreibspeicher (CMOS-RAMs) in Betracht.

Das Auslesen der Koordinatenwerte aus den Datenspeichern erfolgt über einen Binärzähler 116, dessen Zählausgänge mit den Adreßleitungen der Speicher 110, 112 verbunden sind. Der Takteingang des Zählers 116 wird hierzu über das Ausgangssignal eines Taktgenerators 118 angesteuert, dessen Taktfrequenz mit Hilfe eines von Hand, elektronisch oder maschinell betätigbaren Einleseelements 120 einstellbar ist.

Die Datenleitungen der Speicher 110, 112 sind mit dem Eingangspuffer 122, 124 je eines Digital/Analogwandlers 128/130 verbunden, der mit einem Signal angesteuert wird, dessen Frequenz mit dem Taktsignal übereinstimmt, aber gegenüber diesem zumindest um eine der Zugriffszeit der Lesespeicher 110, 112 entsprechende Zeit phasenverschoben ist. Die Phasenverschiebung kann entweder mit dem gestrichelt eingezeichneten Verzögerungsglied 134 (Monoflop) oder dadurch erfolgen, daß der Zähler 116 auf die vordere Flanke und die Eingangspuffer 122, 124 auf die hintere Flanke des rechteckförmigen Taktsignals ansprechen.

Die analogen Ausgangssignale der Digital/Analogwandler 128, 130 werden in je einer Tiefpaß-Filteranordnung 136, 138 geglättet, so daß sich ein stetiger Übergang zwischen den Stützpunkten der Modulationskurve ergibt. Damit die Übergangsbereiche zwischen den Stützpunkten auch bei verschieden eingestellten Taktfrequenzen (Bahngeschwindigkeiten) gleichmäßig durchlaufen werden, sind die Grenzfrequenzen der Filteranordnung 136, 138 der jeweiligen Taktfrequenz anzupassen.

Bei Verwendung normaler Tiefpaß-RC-Filter kann diese Anpassung dadurch erfolgen, daß mit der Verstellung der Taktfrequenz über das Einleseelement 120 gleichzeitig die Widerstands- und/oder die Kapazitätswerte in den Filteranordnungen 136, 138 verstellt werden, wie mit der strichpunktierten Signalleitung 142 angedeutet ist.

Ein wesentlich geringerer Schaltungsaufwand ergibt sich bei Verwendung von ladungskoppelten Filtern (switched capacitor filters), die als integrierte Schaltungen erhältlich sind. Es handelt sich dabei um Filter höherer Ordnung mit frequenzgesteuerten Widerständen. Die Grenzfrequenz kann dort unmittelbar über die Taktfrequenz unter Zwischenschaltung eines Frequenzvervielfachers 144 gesteuer werden. Damit wird eine unmittelbare Kopplung zwischen der am Taktgenerator eingestellten Taktfrequenz und der Grenzfrequenz der Filteranordnungen erzielt, wobei die Grenzfrequenz ein bestimmtes Vielfaches, z. B. das Hundertfache der Taktfrequenz beträgt.

Den Filtern 136, 138 nachgeschaltet ist noch eine elektronische Schaltungsanordnung 146, durch die die Lage der Modulationsfigur im Koordinatensystem vorzugsweise in 4 Schritten zu je 90° gedreht sowie im Falle von symmetrischen Kurven der Umlaufsinn geändert werden kann.

Um den Umlaufsinn auch bei unsymmetrischen Figuren ändern zu können, ist es allerdings zweckmäßiger, einen umschaltbaren Vorwärts-Rückwärtszähler 116 zu verwenden, mit dem die Ausleserichtung beim Auslesen der Speicherinhalte umgedreht werden kann.

Die auf diese Weise erzeugten Analogsignale werden den Verstärkern 148, 150 der X- und Y-Ablenkspulen 154, 156 der Elektronenstrahlschweißmaschine zugeführt.

Als Option ist entsprechend den gestrichelten Teilen der Figur noch die Variation einer dritten Koordinate vorgesehen, die in der Steuerung der Fokuslage des Elektronenstrahls oder in der Steuerung der Strahlstromintensität jeweils in Abhängigkeit von der Position auf der Modulationskurve bestehen kann. Die betreffenden Koordinatenwerte sind wiederum digital in einem Datenspeicher 114 enthalten, aus dem sie mit Hilfe des Zählers 116 sequentiell ausgelesen und über den Digital/Analogwandler 126, 132 in Analogsignale umgewandelt werden können. Nach entsprechender Glättung in dem Tiefpaßfilter 140 werden die Signale dem Verstärker 152 der Fokussierlinse 158 oder einer nicht dargestellten Strahlstromsteuerung der Elektronenstrahlschweißmaschine zugeleitet.

Es hat sich gezeigt, daß für die Darstellung auch relativ komplizierter Modulationskurven maximal 256 Stützpunkte ausreichen. Damit benötigen die Speicher 110, 112, 114 acht Adreßleitungen, die mit den Zählausgängen des Binärzählers 116 verbunden sind. Die Anzahl der Datenleitung der Speicher hängt von der gewünschten Positionierungsgenauigkeit auf der Modulationskurve ab. Üblicherweise genügen acht Datenleitungen, mit denen eine Auflösung von 0,4 % erzielt werden kann. Bei Modulationsfrenzen im Bereich von 0,1 bis 10 kHz erhält man somit Auslesefrequenzen von größenordnungsmäßig 10 kHz bis 10 MHz, vorzugsweise 100 kHz bis 1 MHz. Durch Variation des Abstands der Stützpunkte voneinander kann die Bahngeschwindigkeit entlang der Modulationskurve den Bedürfnissen entsprechend variiert werden.

In den Datenspeichern 110, 112, 114 können in verschiedenen Adreßbereichen die Koordinatensätze einer größeren Anzahl unterschiedlicher Modulationskurven untergebracht werden. Die betreffenden Adreßbereiche sind über ein zweites von Hand oder maschinell betätigbares Einleseelement 160 ansteuerbar. Gleichzeitig kann über das Einleseelement 160 auch der Zählbereich des Zählers 116 für jede ausgewähtlte Modulationskurve verstellt werden, sofern die Anzahl der Stützpunkte in den abgespeicherten Modulationskurven unterschiedlich sein sollte.

Beim Elektronenstrahlschweißen wird der Auftreffpunkt A eines fokussierten Elektronenstrahls b relativ zu dem zu schweißenden Werkstück 10 auf einer vorgegebenen Bahnkurve 12 entlang einem Schweißstoß bewegt. Es ist dabei unerheblich, ob die Relativbewegung durch Verschieben des Werkstücks 10 oder durch entsprechende Bewegung des Elektronenstrahls b hervorgerufen wird. Im Nachstehenden bedeutet v die Vorschubgeschwindigkeit des Werkstücks relativ zum Auftreffpunkt.

Der auf das Werkstück auftreffende Elektronenstrahl b überträgt seine Energie in Form von Wärme auf das Werkstück 10 und heizt dieses lokal über die Schmelz- und Verdampfungstemperatur auf. Es entsteht dabei eine Schmelzzone 14, die durch die Phasengrenze 16 vom Festmaterial getrennt ist, sowie eine innerhalb der Schmelzzone 14 im unmittelbaren Auftreffbereich des Elektronenstrahls angeordnete Dampfkapillare 20, deren Phasengrenze 22 sich im wesentlichen aufgrund der energetischen Gleichgewichtsbedingungem im Grenzbereich einstellt.

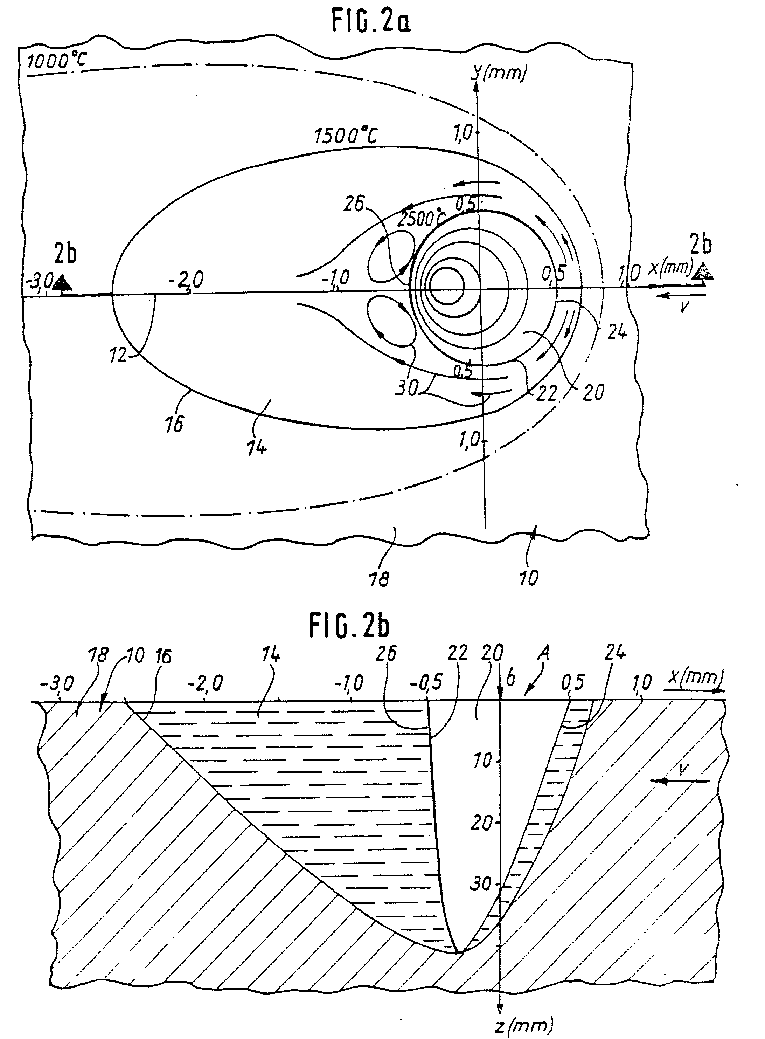

Dass in den Figuren 2a und b gezeichnete Temperaturprofil ist das Ergebnis einer theoretischen Untersuchung der Vorgänge beim Schweißen mit einem ungependelten Elektronenstrahl an einem bewegten Werkstück unter stationären Bedingungen. In Fig. 2a ist eine Draufsicht auf die Werkstückoberfläche (x-y-Ebene) und in Fig. 2b ein senkrechter Schnitt entlang der durch die Bahnkurventangente 12 (x-Achse) und die Strahlrichtung b (z-Achse) aufgespannte Symmetrieebene (x-z-Ebene) dargestellt. Bei dem gezeigten Ausführungsbeispiel wurden die Werkstoffdaten eines Feinkornbaustahls (22 MnMoNi 55) zugrundegelegt (Schmelztemperatur 1 500 °C, Verdampfungstemperatur 2 500 °C bei einem

Druck von $10^{-6}$ bar, Wärmeleitfähigkeit 0,04 W/mmK, Temperaturleitzahl 6 $mm^2s^{-1}$). Als Elektronenstrahl wurde modellmäßig ein zylindrischer Strahl mit 0,5 mm Durchmesser und homogener Stromdichteverteilung unter Berücksichtigung einer Beschleunigungsspannung von 150 kV und einer Strahlstromstärke von 100 mA angenommen. Bezogen auf die Auftreffffläche des Elektronenstrahls ergibt sich dadurch eine Strahlleistungsdichte von 19 $kW/mm^2$, wie sie etwa für Tiefschweißungen erforderlich ist. Als Vorschubgeschwindigkeit v des Werkstücks wurden 10 mm/s gewählt.

Beim Betrachten der Figuren 2a und b ist zu berücksichtigen, daß die Skaleneinteilung auf der x- und y- Achse gegenüber der Einteilung auf der z-Achse um etwa des 20-fache vergrößert dargestellt ist, so daß die Tiefenabmessungen in Fig. 2b stark verkürzt erscheinen.

Die Unsymmetrie des Temperaturprofils bezüglich der y-Koordinate ergibt sich aufgrund der Relativbewegung des Werkstücks 10 gegenüber dem Auftreffpunkt A. Beim Vorschub wird das Material im Bereich der Vorderfront 24 der Dampfkapillare 20 aufgeschmolzen, während es im Bereich der Rückseite 26 erstarrt. Das aufgeschmolzene Material strömt somit im Verlauf des Schweißvorgangs von der Vorderseite um die Dampfkapillare 20 herum zur Rückseite. Nur bei relativ kleinen Vorschubgeschwindigkeiten v von weniger als etwa 1 mm/s kann mit einem laminaren Strömungsverlauf in der Schmelze gerechnet werden. Bei größeren Vorschubgeschwindigkeiten v treten dagegen auf der Rückseite 26 der Dampfkapillare Strömungswirbel oder Turbulenzen in der Schmelzzone 14 auf, die in der Grenzschicht zur Dampfkapillare 20 zu einer Umkehr der Strömungsrichtung führen. Der hierbei zu erwartende Strömungsverlauf ist in Fig. 2a in Form von Stromlinien 30 angedeutet.

Durch ein Pendeln des Elektronenstrahls auf einer gegenüber der Bahnkurve ausgelenkten Modulationskurve wird vor allem erreicht, daß der Kapillarenquerschnitt vergrößert und über die Länge ausgeglichen wird. Um gute Schweißergebnisse zu erhalten, muß die Modulationskurve hinsichtlich Gestalt und Amplitude sowie hinsichtlich der Durchlaufgeschwindigkeit und der Durchlaufrichtung des Elektronenstrahls den Strömungsverhältnissen in der Schmelzzone angepaßt werden.

In den Figuren 3 bis 7 sind einige Modulationskurven mit Richtungspfeilen für die Durchlaufrichtung dargestellt, die sich unter bestimmten Schweißbedingungen als optimal erwiesen haben.

Den verschiedenen Modulationskurven gemeinsam ist die bezüglich der x-Achse, d. h. der Bahnkurventangente 12 und des Schweißstoßes des Werkstücks spiegelsymmetrische Ausbildung der Kurvenzweige 40, die vom Elektronenstrahl in spiegelbildlichen Richtungen durchlaufen werden.

Die Kurvenzweige 40 weisen sowohl in ihren in Bewegungsrichtung x vorderen Teilen 41 als auch in ihren rückwärtigen Teilen 42 einen in Normalenrichtung y der Bahnkurve 12 wenig ausgelenkten Kurvenabschnitt 43', 43" und einen mit diesem stetig über eine Umlenkstrecke 44', 44" verbundenen, stärker ausgelenkten Kurvenabschnitt 45', 45" auf. Die Durchlaufrichtung in den einzelnen Kurvenabschnitten ist dabei so gewählt, daß der Elektronenstrahl zumindest in den gegenüber der Bahnkurve stärker ausgelenkten Kurvenabschnitten 45', 45" mit einer der Strömungsrichtung in den jeweils benachbarten Bereichen der Schmelzone 14 entsprechenden Richtungskomponente bewegt wird. Da die Modulationskurven vom Elektronenstrahl stetig oder schrittweise stetig durchlaufen werden, muß dafür gesorgt werden, daß die entgegen der Strömungsrichtung in der Schmelzzone durchlaufenen Kurvenabschnitte 43', 43" eine geringe Auslenkung gegenüber der Bahnkurve aufweisen. Dementsprechend wird im vorderen Teil 41 eines jeden Modulationskurvenzweigs 40 der wenig ausgelenkte Kurvenabschnitt 43' vom Elektronenstrahl mit einer in Bewegungsrichtung nach vorne weisenden Richtungskomponente und der stärker ausgelenkte Kurvenabschnitt 45' mit einer nach rückwärts weisenden Richtungskomponente durchlaufen.

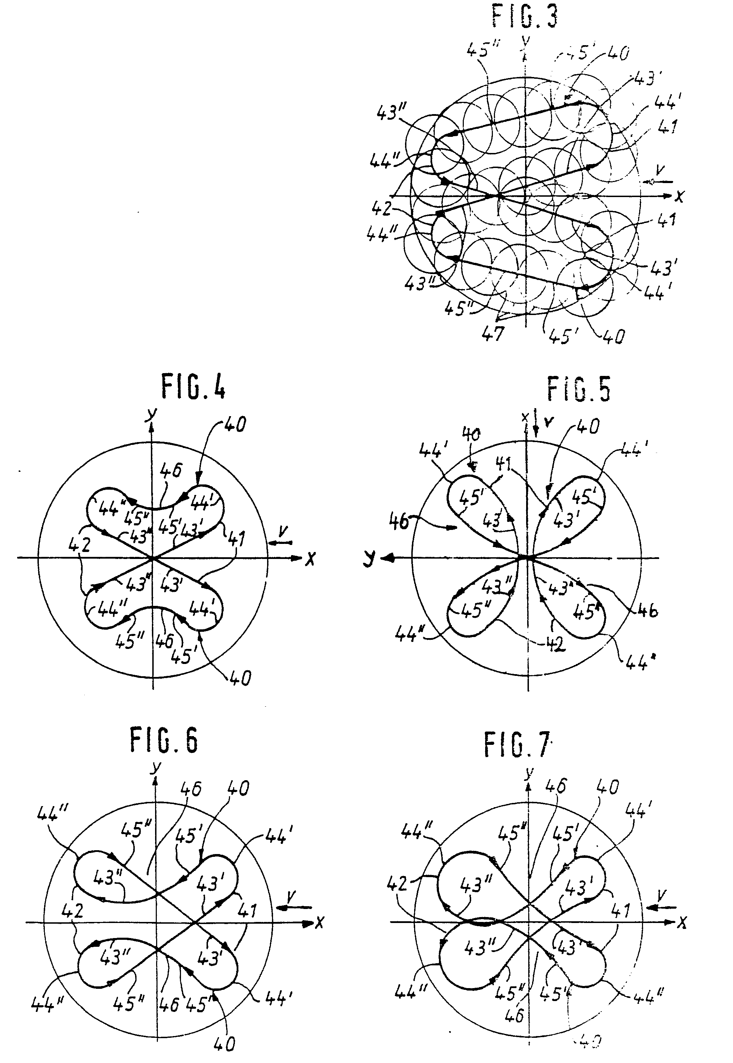

Die optimale Ausbildung und Durchlaufrichtung im rückwärtigen Teil 42 der Modulationskurve hängt davon ab, ob ein laminarer Strömungsverlauf vorliegt oder ob es zu einer Wirbelbildung mit der oben beschriebenen Richtungsumkehr im Strömungsverlauf kommt. Bei niedrigen Vorschubgeschwindigkeiten v, die zu einer laminaren Umströmung der Dampfkapillare führen, haben sich die in den Figuren 3 bis 5 gezeigten Modulationskurven bewährt, deren Zweige 40 im rückwärtigen Teil 42 im stärker ausgelenkten Kurvenabschnitt 45" vom Elektronenstrahl mit nach rückwärts weisender Richtungskomponente und in weniger ausgelenkten Kurvenabschnitt 43" mit nach vorne weisender Richtungskomponente durchlaufen werden. Bei größeren Vorschubgeschwindigkeiten oberhlab etwa 2 mm/s, bei denen es zu Wirbelbildungen kommt, sind mit den in Fig. 6 und 7 gezeigten Modulationskurven bessere Schweißergebnisse zu erwarten, da dort im rückwärtigen Teil 42 eines jeden Kurvenzweigs 40 der wenig ausgelenkte Kurvenabschnitt 43" vom Elektronenstrahl mit nach rückwärts weisender Richtungskomponente und der stärker ausgelenkte Kurvenabschnitt 45" mit nach vorne weisender Richtungskomponente durchlaufen wird.

Die Umlenkstrecken 44', 44" in den vorderen und rückwärtigen Teilen 41, 42 der Modulationskurvenzweige 40, in deren Bereich der Elektronenstrahl meist seine Maximalauslenkung aufweist und am tiefsten in die benachbarten Schmelzzonenbereiche eindringt, sind bei allen Ausführungsbeispielen außerhalb der durch die Bahnkurventangente 12 gebildeten Symmetrielinie angeordnet. Dadurch erhält man eine optimale Unterstützung des Strömungsverlaufs bei geringstmöglicher Störung in der Nähe des Staupunkts an der Vorderfront 24 der Dampfkapillare 20. Zur weiteren Unterstützung der Flüssigkeitsströmung kann es wie im Falle der Fig. 4 bis 7 zweckmäßig sein, die im vorderen und rückwärtigen Teil 41, 42 eines jeden Modulationskurvenzweigs 40 angeordneten Umlenkstrecken 44', 44" durch eine zur Bahnkurve 12 in gerichtete Einschnürung 46 zu trennen.

Die Bahngeschwindigkeit des Elektronenstrahls auf der Modulationskurve sollte zumindest im Verlauf seiner Maximalauslenkung im Bereich der Umlenkstrecken 44', 44" gleichfalls den Strömungsverhältnissen in der Strömungsverhältnissen in der Schmelze angepaßt werden und etwa das 1- bis 10-fache der Strömungsgeschwindigkeit in den vom Elektronenstrahl überstrichenen Bereichen der Schmelzzone oder das 1- bis 20-fache der Vorschubgeschwindigkeit v des Werkstücks 10 betragen. Zu diesem Zweck kann die Modulationskurve vom Elektronenstrahl auch mit variabler Bahngeschwindigkeit durchlaufen werden.

Da eine analytische Darstellung der in Fig. 2 bis 7 gezeigten Modulationskurven nicht möglich ist, werden sie in der Praxis punktweise dargestellt. Der Elektronenstrahl wird dabei schrittweise entlang den die Modulationskurve bildenden diskreten Stützpunkten bewegt. Die Koordinaten der einzelnen Stützpunkte werden aus einer digitalen Speicheranordnung sequentiell ausgelesen, in analoge Strom- und Spannungssignale umgewandelt und in dieser Form den Ablenkspulen oder -platten einer Elektronenstrahlschweißmaschine zugeleitet (Fig. 1). Der Elektronenstrahl kann zwischen zwei Stützpunkten auf einer durch die Stützpunkte begrenzten Interpolationsstrecke kontinuierlich bewegt werden, wobei die Stützpunkte zur Erzeugung einer variablen Bahngeschwindigkeit einen variablen Abstand voneinander aufweisen können.

Um eine stabile Kapillare mit erweitertem Querschnitt zu erhalten, sollte der Durchmesser der Modulationskurve maximal das 5-fache, vorzugsweise das 2- bis 4-fache der Halbwertsbreite des Elektronenstrahls im Auftreffpunkt betragen. Um diese Größenverhältnisse zu veranschaulichen, ist in Fig. 3 der Elektronenstrahl im Verlauf der Modulationskurve in Form von kleinen Kreisen 47 mit einem der Halbwertsbreite entsprechenden Durchmesser angedeutet.

Zur Anpassung an die anisotropen physikalischen Verhältnisse in Vorschubrichtung (x-Achse) und in der dazu senkrechten Richtung (y-Achse) besteht weiter die Möglichkeit, die Amplituden der Modulationskurve in der Tangentenrichtung und der Normalenrichtung der Bahnkurve unabhängig voneinander einstellbar zu machen. Im Falle einer digitalen Vorgabe der x- und y-Korrdinatenwerte der Stützpunkte läßt sich dies ohne weiteres durch die Wahl unterschiedlicher Proportionalitätsfaktoren oder Verstärkungsfaktoren in x- und y-Richtung erreichen.

**Patentansprüche**

1. Verfahren zum Bearbeiten insbesondere Schweißen eines Werkstücks (10) mittels eines fokussierten Elektronenstrahls (b) dessen Auftreffpunkt relativ zum Werkstück auf einer vorgegebenen Bahnkurve (12) bewegt und zusätzlich auf einer der Bahnkurve überlagerten Modulationskurve gegenüber der Bahnkurve abgelenkt wird, wobei der Elektronenstrahl schrittweise entlang einer Folge von die Modulationskurve bildenden diskreten Stützpunkten bewegt wird, dadurch gekennzeichnet, daß die Modulationskurve im wesentlichen spiegelsymmetrisch zur Bahnkurventangente (12) ausgebildete Zweige (40) aufweist und vom Elektronenstrahl (b) in zur Bahnkurventangente spiegelsymmetrischen Richtungen durchlaufen wird, daß die spiegelsymmetrischen Zweige (40) wenig ausgelenkte Kurvenabschnitte (43', 43") und stärker ausgelenkte Kurvenabschnitte (45', 45") aufweisen und daß im vorderen Teil (41) eines jeden Modulationskurvenzweigs (40) die wenig ausgelenkten Kurvenabschnitte (43') vom Elektronenstrahl (b) mit einer entgegen der Bewegungsrichtung (v) nach vorn weisenden Richtungskomponente und die stärker ausgelenkten Kurvenabschnitte (45') mit einer nach rückwärts weisenden Richtungskomponente durchlaufen werden.

2. Verfahren nach Anspruch 1, dadurch gekennzeichnet, daß der Elektronenstrahl an den Stützpunkten der Modulationskurve kurzzeitig angehalten wird.

3. Verfahren nach Anspruch 1 oder 2, dadurch gekennzeichnet, daß der Elektronenstrahl zwischen jeweils zwei Stützpunkten auf einer durch die Stützpunkte begrenzten Interpolationsstrecke kontinuierlich bewegt wird.

4. Verfahren nach einem der Ansprüche 1 bis 3, dadurch gekennzeichnet, daß die Stützpunkte einen variablen Abstand voneinander aufweisen.

5. Verfahren nach einem der Ansprüche 1 bis 4, dadurch gekennzeichnet, daß die Koordinaten der einzelnen Stützpunkte aus einer digitalen Speicheranordnung sequentiell ausgelesen in analoge Strom- oder Spannungssignale umgewandelt und in dieser Form den Ablenkspulen oder -platten für den Elektronenstrahl zugeleitet werden.

6. Verfahren nach Anspruch 5, dadurch gekennzeichnet, daß die den verschiedenen Koordinaten der einzelnen Stützpunkte zugeordneten Amplituden der Analogsignale in einer vor den Ablenkspulen oder -platten angeordneten Filteranordnung geglättet werden, daß die Grenzfrequenz der Filteranordnung eine Funktion der Auslesefrenquenz ist, und daß die Auslesefrequenz und die Grenzfrequenz gemeinsam verstellbar sind.

7. Verfahren nach Anspruch 6, dadurch gekennzeichnet, daß die Grenzfrequenz der Filteranordnung ein bestimmtes Vielfaches, vorzugsweise das Hundertfache, der Auslesefrequenz beträgt.

8. Verfahren nach einem der Ansprüche 1 bis 7, dadurch gekennzeichnet, daß das Koordinatensystem der Modulationskurve im Verlauf der Bahnkurve gedreht wird.

9. Verfahren nach Anspruch 8, dadurch gekennzeichnet, daß das Koordinatensystem der Modulationskurve im Verlauf der Bahnkurve bezüglich der Bahnkurventangente und/oder -normale ausgerichtet wird.

10. Verfahren nach einem der Ansprüche 1 bis 9, dadurch gekennzeichnet, daß die Fokuslage und/oder die Strahlstromintensität entlang der Modulationskurve variiert wird.

11. Verfahren nach Anspruch 10, dadurch gekennzeichnet, daß die den einzelnen Stützpunkten der Modulationskurve zugeordneten Steuerungsdaten für die Fokuslage und/oder die Strahlstromintensität aus einer digitalen Speicheranordnung sequentiell ausgelesen, in ein analoges Strom- oder Spannungssignal umgewandelt und gegebenenfalls nach Glättung in einer weiteren Filteranordnung zur Fokussierung und/oder Strahlstromsteuerung des Elektronenstrahls verwendet werden.

12. Verfahren nach einem der Ansprüche 6 bis 11, dadurch gekennzeichnet, daß die Auslesefrequenz in einem Bereich zwischen 10 kHz und 10 MHz, vorzugsweise zwischen 100 kHz und 1 MHz, gewählt wird.

13. Verfahren nach einem der Ansprüche 1 bis 12, bei welchem der Elektronenstahl im Bereich seines Auftrettpunkts im Werkstück eine Schmelzzone und eine innerhalb der Schmelzzone angeordnete Dampfkapillare erzeugt, dadurch gekennzeichnet, daß durch die Relativbewegung (Geschwindigkeit v) des Werkstücks (10) gegenüber dem Auftreffpunkt innerhalb der Schmelzzone (14) eine von der entgegen der Bewegungsrichtung des Werkstücks gesehen vorderen Seite (24) um die Dampfkapillare (20) herum zur Rückseite (26) geführte Strömung (30) erzeugt wird, und daß der Elektronenstrahl (b) zumindest in den gegenüber der Bahnkurve (12) stärker ausgelenkten Abschnitten (45', 45") mit einer der Strömungsrichtung in den jeweils benachbarten Bereichen der Schmelzzone (14) entsprechenden Richtungskomponente bewegt wird.

14. Verfahren nach einem der Ansprüche 1 bis 13, dadurch gekennzeichnet, daß die Modulationskurve vom Elektronenstrahl (b) stetig oder schrittweise stetig durchlaufen wird und daß die entgegen der Strömungsrichtung der Schmelze durchlaufenen Abschnitte (43', 43") der Modulationskurve eine geringe Auslenkung gegenüber der Bahnkurve (12) aufweisen.

15. Verfahren nach einem der Ansprüche 1 bis 14, dadurch gekennzeichnet, daß die Bahngeschwindigkeit des Elektronenstrahls (b) auf der Modulationskurve zumindest im Verlauf seiner Maximalauslenkung in der gleichen Größenordnung wie die Strömungsgeschwindigkeit der Schmelze in den vom Elektronenstrahl überstrichenen Bereichen der Schmelzzone (14) gewählt wird.

16. Verfahren nach einem der Ansprüche 1 bis 15, dadurch gekennzeichnet, daß die Bahngeschwindigkeit des Elektronenstrahls (b) auf der Modulationskurve zumindest im Verlauf seiner Maximalauslenkung das 1- bis 10-fache der Strömungsgeschwindigkeit der Schmelze in den vom Elektronenstrahl überstrichenen Bereichen der Schmelzzone (14) beträgt.

17. Verfahren nach einem der Ansprüche 1 bis 16, dadurch gekennzeichnet, daß die Bahngeschwindigkeit des Elektronenstrahls (b) auf der Modulationskurve zumindest im Verlauf seiner Maximalauslenkung das 1- bis 20-fache der Relativgeschwindigkeit (v) zwischen Werkstück (10) und Auftreffpunkt (A) beträgt.

18. Verfahren nach einem der Ansprüche 1 bis 17, dadurch gekennzeichnet, daß der Durchmesser der Modulationskurve (40) das 1- bis 5-fache, vorzugsweise das 2- bis 4-fache der Halbwertsbreite des Elektronenstrahls (b) im Auftreffpunkt (A) beträgt.

19. Verfahren nach einem der Ansprüche 1 bis 18, dadurch gekennzeichnet, daß im rückwärtigen Teil (42) eines jeden Modulationskurvenzweigs (40) der stärker ausgelenkte Kurvenabschnitt (45″) vom Elektronenstrahl (b) mit nach rückwärts weisender Richtungskomponente und der wenig ausgelenkte Kurvenabschnitt (43″) mit nach vorne weisender Richtungskomponente durchlaufen wird (Fig. 2 bis 5).

20. Verfahren nach einem der Ansprüche 1 bis 18, dadurch gekennzeichnet, daß im rückwärtigen Teil (42) eines jeden Modulationskurvenzweigs (40) der wenig ausgelenkte Kurvenabschnitt (43″) vom Elektronenstrahl (b) mit nach rückwärts weisender Richtungskomponente und der stärker ausgelenkte Kurvenabschnitt (45″) mit nach vorne weisender Richtungskomponente durchlaufen wird (Fig. 6 und 7).

21. Verfahren nach einem der Ansprüche 1 bis 20, dadurch gekennzeichnet, daß der Elektronenstrahl (b) im Bereich der Umlenkstrecken (44′, 44″) der Modulationskurve seine Maximalauslenkungen aufweist.

22. Verfahren nach Anspruch 21, dadurch gekennzeichnet, daß die Umlenkstrecken (44′, 44″) der Modulationskurve außerhalb der durch die Bahnkurventangente (12) gebildeten Symmetrielinie angeordnet sind.

23. Verfahren nach Anspruch 21 oder 22, dadurch gekennzeichnet, daß im vorderen und rückwärtigen Teil (41, 42) eines jeden Modulationskurvenzweigs (40) durch eine Einschnürung (26) zur Bahnkurve (12) hin voneinander getrennte Umlenkstrecken (44′, 44″) angeordnet sind (Fig. 4 bis 7).

24. Anordnung zum Bearbeiten insbesondere Schweißen eines Werkstücks mittels eines fokussierten Elektronenstahls in einer Elektronenstrahlbearbeitungsmaschine wobei der Auftreffpunkt des Elektronenstrahls relativ zum Werkstück auf einer vorgegebenen Bahnkurve bewegbar und zusätzlich auf einer der Bahnkurve überlagerten Modulationskurve gegenüber der Bahnkurve ablenkbar ist, und wobei der Elektronenstrahl schrittweise entlang einer Folge von die Modulationskurve bildenden von einer digitalen Speicheranordnung ausgelesenen diskreten Stützpunkten bewegbar ist zur Durchführung des Verfahrens nach einem der Ansprüche 1 bis 23, dadurch gekennzeichnet, daß die digitale Speicheranordnung mindestens zwei Datenspeicher (110, 112) für die X- und Y-Koordinatenwerte der Stützpunkte der Modulationskurve aufweist, deren Adreßleitungen gemeinsam mit dem Zählausgang eines durch einen Taktgenerator (118) mit einer Taktfrequenz zwischen 10 kHz und 10 MHz, vorzugsweise zwischen 100 kHz und 1 MHz, angesteuerten Zählers (116) und deren Datenleitungen mit dem Eingang je eines die betreffenden Ablenkspulen (154, 156) oder -platten der Elektronenstrahlbearbeitungsmaschine ansteuernden Digital/Analogwandlers (128, 130) verbunden sind.

25. Anordnung nach Anspruch 24, gekennzeichnet durch ein Einleseelement (160) zur Ansteuerung unterschiedlicher, zur Aufnahme der Koordinatenwerte verschiedener Modulationskurven bestimmter Adressenbereiche der Datenspeicher (110, 112, 114).

26. Anordnung nach Anspruch 25, dadurch gekennzeichnet, daß mit der Einleseelement (160) außerdem die Anzahl der Zählschritte des Zählers (116) einstellbar ist.

27. Anordnung nach einem der Ansprüche 24 bis 26, gekennzeichnet durch einen weiteren an seinen Adreßleitungen über den Zählausgang des Zählers (116) ansteuerbaren Datenspeicher (114), dessen Datenleitungen mit dem Eingang eines weiteren Digital/Analogwandlers (132) verbunden sind, mit dessen Ausgangssignal eine Fokussierlinse (158) und/oder die Strahlstromsteuerung der Elektronenstrahlbearbeitungsmaschine ansteuerbar ist.

28. Anordnung nach einem der Ansprüche 24 bis 27, dadurch gekennzeichnet, daß die Digital/Analogwandler (128, 130, 132) einen Eingangspuffer (122, 124, 126) enthalten, der mit einem dem Taktsignal des Zählers (116) frequenzgleichen, aber gegenüber diesem phasenverzögerten Steuersignal ansteuerbar ist.

29. Anordnung nach einem der Ansprüche 24 bis 28, dadurch gekennzeichnet, daß zwischen den Digital/Analogwandlern und den Verstärkern (148, 150, 152) für die Ablenkspulen (154, 156) oder -platten bzw. die Fokussierlinse (158) und/oder Strahlstromsteuerung je ein Tiefpaßfilter (136, 138, 140) mit einer von der Takfrequenz abhängigen Grenzfrequenz angeordnet ist.

30. Anordnung nach Anspruch 29, dadurch gekennzeichnet, daß die Taktfrequenz des Taktgenerators (118) und die Grenzfrequenz der Tiefpaßfilter (136, 138, 140) gemeinsam über mindestens ein von Hand, maschinell oder elektronisch betätigbares Einleseelement (120) verstellbar sind.

31. Anordnung nach Anspruch 29, dadurch gekennzeichnet, daß die Tiefpaßfilter (136, 138, 140) als ladungsgekoppelte Filter ausgebildet sind, deren Grenzfrequenz über das Ausgangssignal des Taktgenerators (118) unter Zwischenschaltung eines Frequenzvervielfachers (144) steuerbar ist.

32. Anordnung nach einem der Ansprüche 15 bis 31, gekennzeichnet durch eine zwischen den Tiefpaßfiltern (136, 138) und deren Verstärkern (148, 150) für die Ablenkspulen (154, 156) oder -platten angeordnete Schaltungsanordnung zur Drehung des Koordinatensystems der Modulationskurve oder zur Änderung ihres Umlaufsinns.

## Claims

1. Method of treating, especially welding, a workpiece (10) by a focused electron beam (b) whose point of impact is moved relative to the workpiece on a set path (12) and in addition is deflected from said path on a modulation contour superimposed thereon, the electron beam being moved in steps along a series of discrete support points forming the modulation contour, characterised in that the modulation contour exhibits branches (40) which are essentially image symmetric to the tangent of the path (12) and is traversed by the electron beam (b) in directions that are image symmetric to the tangent of the path, that the image symmetric branches (40) exhibit slightly deflected arcs (43', 43") and more steeply deflected arcs (45', 45"), and that in the front portion (41) of each branch (40) of the modulation contour the electron beam (b) traces the slightly deflected arcs (43') with a direction component orientated forwards and contrary to the direction of motion (v), and the more steeply deflected arcs (45') with a direction component that is orientated backwards.

2. The method of claim 1, characterised in that the electron beam is halted briefly at the support points of the modulation contour.

3. The method of claim 1 or 2, characterised in that the electron beam is moved continuously between each of two support points on an interpolation line delimited by the support points.

4. The method of any of claims 1 to 3, characterised in that there is a variable distance between the support points.

5. The method of any of claims 1 to 4, characterised in that the coordinates of the individual support points are read out sequentially from a digital storage unit, converted into analogue current or voltage signals and in this form applied to the deflection coils or plates for the electron beam.

6. The method of claim 5, characterised in that the amplitudes of the analogue signals derived from the various coordinates of the individual support points are equalised in a filter device arranged in front of the deflection coils or plates, that the cut-off frequency of the filter device is a function of the read-out frequency, and that the read-out frequency and cut-off frequency can be adjusted jointly.

7. The method of claim 6, characterised in that the cut-off frequency of the filter device is a certain multiple of the read-out frequency, preferably one hundred times the latter.

8. The method of any of claims 1 to 7, characterised in that the system of coordinates of the modulation contour is rotated as the path is traced.

9. The method of claim 8, characterised in that as the path is traced, the system of coordinates of the modulation contour is aligned relative to the tangent and/or normal of the path.

10. The method of any of claims 1 to 9, characterised in that the focal position and/or the beam current intensity is varied along the modulation contour.

11. The method of claim 10, characterised in that the control data for the focal position and/or beam current intensity derived from the individual support points of the modulation contour are read out sequentially from a digital storage unit, converted into an analogue current or voltage signal and, after equalisation in a further filter device if necessary, are used to focus and/or control the beam current of the electron beam.

12. The method of any of claims 6 to 11, characterised in that the read-out frequency is selected to be in a range between 10 kHz and 10 MHz, preferably between 100 kHz and 1 MHz.

13. The method of any of claims 1 to 12, where in the region of its point of impact the electron beam produces a fusion zone in the workpiece and a vapour capillary disposed inside the fusion zone, characterised in that the motion (velocity v) of the workpiece (10) relative to the point of impact inside the fusion zone (14) produces a flux (30) which passes from the front side (24) as seen from opposite the direction of movement of the workpiece, around the vapour capillary (20) to the rear side (26), and that at least in the arcs (45', 45") that are more steeply deflected in relation to the path (12) the movement of the electron beam (b) has a direction component that corresponds to the direction of flow in whichever of the regions of the fusion zone (14) are adjacent.

14. The method of any of claims 1 to 13, characterised in that the electron beam (b) traces the modulation contour in a constant or stepwise manner and that arcs (43', 43") which are traced in a contrary direction to the direction of flow of the fused mass are slightly deflected from the path (12).

15. The method of any of claims 1 to 14, characterised in that the path velocity of the electron beam (b) on the modulation contour is selected at least during its maximum deflection to be of the same order of magnitude as the flow velocity of the fused mass in the regions of the fusion zone (14) swept by the electron beam.

16. The method of any of claims 1 to 15, characterised in that the path velocity of the electron beam (b) on the modulation contour is, at least during its maximum deflection, 1 to 10 times the flow velocity of the fused mass in the regions of the fusion zone (14) swept by the electron beam.

17. The method of any of claims 1 to 16, characterised in that the path velocity of the electron beam (b) on the modulation contour is, at least during its maximum deflection, 1 to 20 times the relative velocity (v) between the workpiece (10) and point of impact (A).

18. The method of any of claims 1 to 17, characterised in that the diameter of the modulation contour (40) is 1 to 5 times, preferably 2 to 4 times, the half-width of the electron beam (b) at the point of impact (A).

19. The method of any of claims 1 to 18, characterised in that in the rear portion (42) of each of the modulation contour branches (40) the electron beam (b) traces more steeply deflected arc (45″) with a backward orientated direction component and the slightly deflected arc (43″) with a forward orientated direction component (Figs. 2 to 5).

20. The method of any of claims 1 to 18, characterised in that in the rear portion (42) of each of the modulation contour branches (40) the electron beam (b) traces the slightly deflected arc (43″) with a backward orientated direction component and the more steeply deflected arc (45″) with a forward orientated direction component (Figs. 6 and 7).

21. The method of any of claims 1 to 20, characterised in that the maximum deflections of the electron beam (b) occur in the region of the turn sections (44′, 44″) of the modulation contour.

22. The method of claim 21, characterised in that the turn sections (44′, 44″) of the modulation contour are located outside the line of symmetry formed by the path tangent (12).

23. The method of claim 21 or 22, characterized in that turn sections (44′, 44″) that are separate from each other are disposed in the front and rear portion (41, 42) of each of the modulation contour branches (40) due to a constriction (26) in the direction of the path (12) (Fig. 4 to 7).

24. Device for treating, especially welding, a workpiece by a focused electon beam in an electron beam processing machine wherein the impact point of the electron beam is movable relative to the workpiece on a set path and in addition is deflectable from said path on a modulation contour superimposed thereon and wherein the electron beam is movable in steps along a series of discrete support points forming the modulation contour and read out from a digital storage unit to implement the method of claims 1 to 23, characterised in that the digital storage unit exhibits at least two data stores (110, 112) for the X and Y coordinates of the support points of the modulation contour, whose address lines jointly are linked to the output from a counter (116) controlled by a clock pulse generator (118) with a clock frequency between 10 kHz and 10 MHz, preferably between 100 kHz and 1 MHz, and whose data lines are respectively linked to the input of one of the digital-to-analogue converters (128, 130) controlling the respective deflection coils (154, 156) or plates of the electron beam processing machine.

25. The device of claim 24, characterised by a read-in element (160) for selecting various specific memory locations in the data stores (110, 112, 114) to enter the values of the coordinates of different modulation contours.

26. The device of claim 25, characterised in that the read-in element (160) is also used to adjust the number of counting steps by the counter (116).

27. The device of any of claims 24 to 26, characterised by a further data store (114) whose address lines can be selected *via* the output of the counter (116), and whose data lines are linked to the output of a further digital-to-analogue converter (132) by means of whose output signal a focusing lens (158) and/or the beam current control of the electron beam processing machine can be actuated.

28. The device of any of claims 24 to 27, characterised in that the digital-to-analogue converters (128, 130, 132) contain an input buffer (122, 124, 126) which can be selected with a control signal in straightline frequency with the clock signal of the counter (116) but phaselagged relative thereto.

29. The device of any of claims 24 to 28, characterised in that between the digital-to-analogue converters and the amplifiers (148, 150, 152) for the deflection coils (154, 156) or plates and the focusing lens (158) and/or beam current control, respectively, in each case a low-pass filter (136, 138, 140) is arranged whose cut-off frequency depends on the clock frequency.

30. The device of claim 29, characterised in that the clock frequency of the clock pulse generator (118) and the cut-off frequency of the low-pass filters (136, 138, 140) are adjustable jointly *via* at least one read-in element (120) operated by hand, mechanically or electronically.

31. The device of claim 29, characterised in that the low-pass filters (136, 138, 140) are of the charge-coupled type whose cut-off frequency can be controlled *via* the output signal from the clock pulse generator (118) by interfacing a frequency multiplier (144).

32. The device of any of claims 15 to 31, characterised by circuitry for the deflection coils (154, 156) or plates disposed between the low-pass filters (136, 138) and their amplifiers (148, 150) to rotate the system of coordinates of the modulation contour or to change its direction of motion.

**Revendications**

1. Procédé pour le travail, notamment le soudage, d'une pièce ouvrée (10) au moyen d'un faisceau d'électrons focalisé (b) dont le point d'impact (A) est déplacé par rapport à cette pièce le long d'une courbe de trajectoire (12) prédéterminée et est en outre dévié par rapport à cette courbe de trajectoire le long d'une courbe de modulation superposée à ladite courbe de trajectoire, le faisceau d'électrons (b) étant déplacé pas à pas le long d'une suite de points d'appui discrets qui forment la courbe de modulation, caractérisé en ce que la courbe de modulation comporte des branches (40) ayant une forme sensiblement symétrique par rapport à la tangente à la courbe de la trajectoire (12) et est parcourue par le faisceau d'électrons (b) dans des directions symétriques par rapport à cette tangente à la courbe de la trajectoire, que les branches symétriques (40) comportent des segments de courbe peu déviés (43', 43") et des segments de courbe plus déviés (45', 45"), et que dans la partie antérieure (41) de chacune des branches (40) de la courbe de modulation, les segments de courbe peu déviés (43', 43") sont parcourus par le faisceau d'électrons (b) avec une composante de direction orientée vers l'avant, dans le sens opposé au sens du mouvement (v), et les segments de courbe plus déviés (45', 45") sont parcourus avec une composante de direction orientée vers l'arrière.

2. Procédé selon la revendication 1, caractérisé en ce que le faisceau d'électrons (b) est maintenu pendant un court temps aux points d'appui de la courbe de modulation.

3. Procédé selon la revendication 1 ou 2, caractérisé en ce que le faisceau d'électrons (b) est déplacé de façon continue chaque fois entre deux points successifs le long d'un trajet d'interpolation limité par ces points d'appuis.

4. Procédé selon l'une des revendications précédentes, caractérisé en ce que les points d'appui ont un écartement variable les uns des autres.

5. Procédé selon l'une des revendications précédentes, caractérisé en ce que les coordonnées des différents points d'appui sont lues de façon séquentielle dans un dispositif de mémorisation numérique, puis converties en signaux analogiques de tension ou de courant et appliqués sous cette forme aux bobines ou aux plaques de déviation du faisceau d'électrons.

6. Procédé selon la revendication 5, caractérisé en ce que les amplitudes des signaux analogiques associées aux différentes coordonnées des différents points d'appui sont filtrées dans un montage de filtrage disposé avant les bobines ou les plaques de déviation, que la fréquence de coupure de ce montage de filtrage est une fonction de la fréquence de lecture ; et que la fréquence de lecture et la fréquence de coupure sont réglables ensemble.

7. Procédé selon la revendication 6, caractérisé en ce que la fréquence de coupure du montage de filtrage est un multiple, de préférence le centuple, de la fréquence de lecture.

8. Procédé selon l'une des revendications précédentes, caractérisé en ce que l'on fait tourner le système de coordonnées de la courbe de modulation le long de la courbe de la trajectoire.

9. Procédé selon la revendication 8, caractérisé en ce que le système de coordonnées de la courbe de modulation est orienté par rapport à la tangente ou à la normale à la courbe de la trajectoire, ou aux deux, le long de celle-ci.

10. Procédé selon l'une des revendications précédentes, caractérisé en ce que l'on fait varier la position du foyer ou l'intensité du courant du faisceau d'électrons, ou les deux, le long de la courbe de modulation.

11. Procédé selon la revendication 10, caractérisé en ce que les données de commande pour la position du foyer ou l'intensité du faisceau d'électrons, ou les deux, associées aux différents points d'appui de la courbe de modulation sont lues de façon séquentielle dans un dispositif de mémorisation numérique, puis converties en signaux analogiques de courant ou de tension et, éventuellement après filtrage dans un montage de filtrage supplémentaire, sont utilisés pour la focalisation ou la commande d'intensité du courant du faisceau d'électrons, ou les deux.

12. Procédé selon l'une des revendications 6 à 11, caractérisé en ce que la fréquence de lecture est choisie dans l'intervalle de 10 kHz à 10 MHz, de préférence entre 100 kHz et 1 MHz.

13. Procédé selon l'une des revendications précédentes, dans lequel le faisceau d'électrons crée dans la zone de son point d'impact sur la pièce ouvrée une zone de métal en fusion et un capillaire de vapeur situé à l'intérieur de cette zone, caractérisé en ce que le mouvement relatif (à la vitesse v) de la pièce ouvrée (10) par rapport au point d'impact (A) du faisceau d'électrons (b) crée à l'intérieur de la zone de métal en fusion (14) un écoulement (30) qui va du côté antérieur (24) du capillaire de vapeur (20), vu dans le sens opposé au sens de déplacement de la pièce ouvrée, au côté postérieur (26) en contournant ce capillaire, et que le faisceau d'électrons (b), au moins le long des segments plus déviés (45', 45") par rapport à la courbe de la trajectoire (12), est déplacé avec une composante de direction correspondant à la direction de l'écoulement dans les domaines de la zone de fusion (14) proches de ces segments.

14. Procédé selon l'une des revendications précédentes, caractérisé en ce que la courbe de modulation est parcourue de façon continue ou continue pas à pas par le faisceau d'électrons (b), et que les segments (43', 45") de la courbe de modulation qui sont parcourus dans une direction opposée à la direction d'écoulement du métal en fusion présentent une faible déviation par rapport à la courbe de la trajectoire (12).

15. Procédé selon l'une des revendications précédentes, caractérisé en ce que la vitesse de déplacement du faisceau d'électrons (b) le long de la courbe de modulation, au moins aux points où sa déviation est maximale, est choisie du même ordre de grandeur que la vitesse d'écoulement du métal en fusion dans les domaines de la zone de métal en fusion (14) frappés par le faisceau d'électrons (b).

16. Procédé selon l'une des revendications précédentes, caractérisé en ce que la vitesse de déplacement du faisceau d'électrons (b) le long de la courbe de modulation, au moins aux points où sa déviation est maximale, est égale à 1 à 10 fois la vitesse d'écoulement du métal en fusion dans les domaines de la zone de métal en fusion (14) frappés par le faisceau d'électrons (b).

17. Procédé selon l'une des revendications précédentes, caractérisé en ce que la vitesse de déplacement du faisceau d'électrons (b) le long de la courbe de modulation, au moins aux points où sa déviation est maximale, est égale à 1 à 20 fois la vitesse relative (v) entre la pièce ouvrée (10) et le point d'impact (A) de ce faisceau.

18. Procédé selon l'une des revendications précédentes, caractérisé en ce que le diamètre de la courbe de modulation (40) est égal à 1 à 5 fois, de préférence 2 à 4 fois, la demi-largeur du faisceau d'électrons (b) au point d'impact (A) de celui-ci.

19. Procédé selon l'une des revendications précédentes, caractérisé en ce que, dans la partie postérieure (42) de chacune des branches (40) de la courbe de modulation, le segment de courbe plus dévié (45") est parcouru par le faisceau d'électrons (b) avec une composante de direction orientée vers l'arrière, et le segment de courbe peu dévié (43") avec une composante de direction orientée vers l'avant (figures 2 à 5).

20. Procédé selon l'une des revendications 1 à 18, caractérisé en ce que, dans la partie postérieure (42) de chacune des branches (40) de la courbe de modulation, le segment de courbe peu dévié (43") est parcouru par le faisceau d'électrons (b) avec une composante de direction orientée vers l'arrière et le segment de courbe plus dévié avec une composante de direction orientée vers l'avant (figures 6 et 7).

21. Procédé selon l'une des revendications précédentes, caractérisé en ce que le faisceau d'électrons (b) présente ses déviations maximales le long des segments de changement de direction (44', 44").

22. Procédé selon la revendication 21, caractérisé en ce que les segments de changement de direction (44', 44") de la courbe de modulation se trouvent en dehors de la ligne de symétrie formée par la tangente à la courbe de la trajectoire (12) du faisceau d'électrons (b).

23. Procédé selon la revendication 21 ou 22, caractérisé en ce que, dans la partie antérieure (41) et la partie postérieure (42) de chacune des branches (40) de la courbe de modulation, des segments de changement de direction (44', 44") séparés l'un de l'autre par un resserrement (26) orienté dans la direction de la courbe de la trajectoire (12) sont disposés (figures 4 à 7).

24. Montage pour le travail, notamment le soudage, d'une pièce ouvrée (10) au moyen d'un faisceau d'électrons focalisé (b) dans une machine à usiner par bombardement électronique, le point d'impact (A) du faisceau d'électrons par rapport à la pièce pouvant être déplacé le long d'une courbe de trajectoire prédéterminée (12) et pouvant en outre être dévié par rapport à cette courbe de trajectoire le long d'une courbe de modulation superposée à ladite courbe de trajectoire, et le faisceau d'électrons pouvant être déplacé pas à pas le long d'une suite de points d'appui discrets formant la courbe de modulation et lus dans un dispositif de mémorisation numérique pour la mise en œuvre du procédé selon l'une des revendications 1 à 23, caractérisé en ce que le dispositif de mémorisation numérique comporte au moins deux mémoires de données (110, 112) pour les valeurs des coordonnées x et y des points d'appui, dont les lignes d'adresse sont reliées ensemble à la sortie de comptage d'un compteur (116) attaqué par les signaux d'un générateur de signaux de cadencement (118) à fréquence de cadencement comprise entre 10 kHz et 10 MHz, de préférence entre 100 kHz et 1 MHz, et dont les lignes de données sont reliées à l'entrée d'un des convertisseurs numérique/analogique (128, 130), respectivement, dont les signaux de sortie attaquent les bobines ou les plaques de déviation correspondantes (154, 156) de la machine à usiner par bombardement électronique.

25. Montage selon la revendication 24, caractérisé en ce qu'il comporte un élément de mémorisation (160) pour l'attaque de différentes zones d'adresses déterminées des mémoires de données (110, 112, 114) pour la mémorisation des valeurs des coordonnées de différentes courbes de modulation.

26. Montage selon la revendication 25, caractérisé en ce que l'élément de mémorisation (160) permet en outre de régler le nombre de pas de comptage du compteur (116).

27. Montage selon l'une des revendications 24 à 26, caractérisé en ce qu'une mémoire de données supplémentaires (114) a ses lignes d'adresses attaquées par l'intermédiaire de la sortie de comptage du compteur (116) et ses lignes de données reliées à l'entrée d'un convertisseur numérique/analogique supplémentaire (122) dont le signal de sortie attaque une lentille de focalisation (158) ou une commande de l'intensité du courant du faisceau d'électrons, ou les deux.

28. Montage selon l'une des revendications 24 à 27, caractérisé en ce que les convertisseurs numérique/analogique (128, 130, 132) contiennent chacun une mémoire-tampon d'entrée (122, 124, 126) qui peut être attaqué par un signal de commande dont la fréquence est la même que celle du signal de cadencement du compteur (116), mais qui est déphasé en retard par raport à ce signal.

29. Montage selon l'une des revendications 24 à 28, caractérisé en ce qu'un filtre passe-bas (136, 138, 140) dont la fréquence de coupure dépend de la fréquence des signaux de cadencement, est monté entre les convertisseurs numérique/analogique (128, 130, 132), respectivement, et les amplificateurs respectifs (148, 150, 152) pour les bobines de déviation (154, 156) ou les plaques de déviation et la lentille de focalisation (158) ou la commande d'intensité de courant du faisceau d'électrons, ou les deux.

30. Montage selon la revendication 29, caractérisé en ce que la fréquence de cadencement du générateur de signaux de cadencement (118) et la fréquence de coupure des filtres passe-bas (136, 138, 140) peuvent être réglées ensemble au moyen d'au moins un élément de mémorisation (120) qui peut être actionné à la main, automatiquement ou électroniquement.

31. Montage selon la revendication 29, caractérisé en ce que les filtres passe-bas (136, 138, 140) sont réalisés sous la forme de filtres à couplage par charges dont la fréquence de coupure peut être commandée par le signal de sortie du générateur de signaux de cadencement (118) avec interposition d'un multiplicateur de fréquence (144).

32. Montage selon l'une des revendications 15 à 31, caractérisé en ce qu'il comporte, entre les filtres passe-bas (136, 138) et leurs amplificateurs (148, 150) pour les bobines de déviation (154, 156) ou les plaques de déviation, un montage pour réaliser la rotation du système de coordonnées de la courbe de modulation ou pour changer son sens de parcours.

FIG.1

0 100 933

FIG.2a

FIG.2b

0 100 933

FIG.3

FIG.4

FIG.5

FIG.6

FIG.7

3